# FASCICULE DE BREVET EUROPEEN

(11) **EP 4 299 445 B1**
(45) Date de publication et mention de la délivrance du brevet: **06.05.2026**
(21) Numéro de dépôt: 23178114.7
(22) Date de dépôt: 07.06.2023
(51) Int. Cl.: B64D 27/24, B64D 37/30, B64D 41/00, B64D 27/34

(54) **ENSEMBLE DE PROPULSION ÉLECTRIQUE COMPRENANT AU MOINS DEUX SUPPORTS INDÉPENDANTS, AÉRONEF COMPORTANT AU MOINS UN TEL ENSEMBLE DE PROPULSION ÉLECTRIQUE**
ELEKTRISCHE ANTRIEBSANORDNUNG MIT MINDESTENS ZWEI UNABHÄNGIGEN TRÄGERN, LUFTFAHRZEUG MIT MINDESTENS EINER SOLCHEN ELEKTRISCHEN ANTRIEBSANORDNUNG
ELECTRIC PROPULSION ASSEMBLY COMPRISING AT LEAST TWO INDEPENDENT SUPPORTS, AIRCRAFT COMPRISING AT LEAST ONE SUCH ELECTRIC PROPULSION ASSEMBLY

(30) Priorité: 27.06.2022 FR 2206360
(43) Date de publication de la demande: 03.01.2024
(73) Titulaire: AIRBUS OPERATIONS (S.A.S.), 31060 Toulouse (FR)
(72) Inventeur: FUKASAKU, Kotaro, 31060 TOULOUSE (FR); AMARGIER, Rémi, 31060 TOULOUSE (FR); CZAPLA, Lionel, 31060 TOULOUSE (FR); JOLIVET, Nicolas, 31060 TOULOUSE (FR); POME, Pascal, 31060 TOULOUSE (FR)
(74) Mandataire: Fantin, Laurent

(56) Documents cités:
- EP-A1- 3 757 012
- EP-A1- 4 112 476
- FR-A1- 3 097 201
- US-A1- 2021 261 260
- US-A1- 2021 269 152

## Description

La présente demande se rapporte à un ensemble de propulsion électrique comprenant au moins deux supports indépendants ainsi qu'à un aéronef comportant au moins un tel ensemble de propulsion électrique.

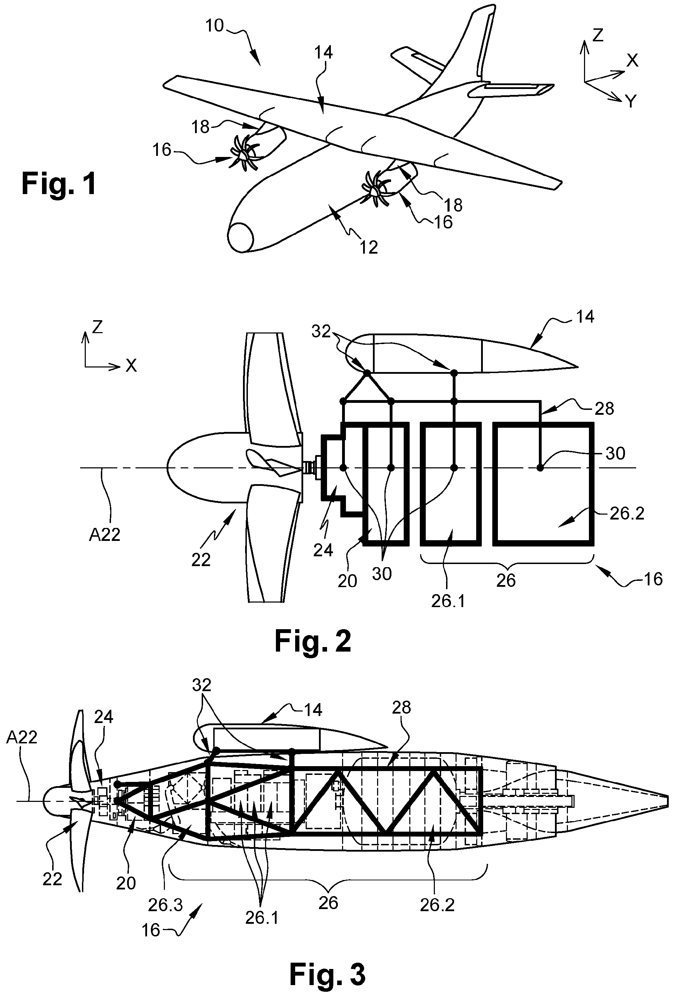

Selon un mode de réalisation visible sur la figure 1, un aéronef 10 comprend un fuselage 12, des ailes 14 reliées au fuselage 12 ainsi que des ensembles de propulsion 16 reliés aux ailes 14 par des mâts 18 et disposés de part et d'autre du fuselage 12.

Comme illustré sur les figures 2 et 3, chaque ensemble de propulsion 16 comprend au moins un moteur électrique 20, une hélice 22 présentant un axe de rotation A22 ainsi qu'un système d'accouplement 24, comme une boîte de vitesse ou un réducteur par exemple, reliant le moteur électrique 20 et l'hélice 22. Selon une configuration, l'ensemble de propulsion 16 comprend également au moins une source d'énergie électrique 26 comportant des piles à combustible 26.1, au moins un réservoir d'hydrogène 26.2 configuré pour alimenter en hydrogène les piles à combustible 26.1 ainsi qu'éventuellement un système de refroidissement 26.3 pour réguler la température des piles à combustible 26.1.

Selon le mode de réalisation visible sur les figures 2 et 3, l'ensemble de propulsion 16 comprend un unique support 28 auquel sont reliés, grâce à des systèmes de liaison 30, le moteur électrique 20, l'hélice 22, le système d'accouplement 24, les piles à combustible 26.1, le réservoir d'hydrogène 26.2 et le système de refroidissement 26.3, ainsi qu'au moins une attache voilure 32 configurée pour relier le support 28 à l'une des ailes 14.

En fonctionnement, le moteur électrique 20, l'hélice 22 et le système d'accouplement 24 génèrent des vibrations d'un niveau élevé. Les piles à combustible 26.1 et le réservoir d'hydrogène 26.2 étant sensibles aux vibrations, le support 28 et/ou certains systèmes de liaison 30 sont conçus de manière à limiter la propagation des vibrations en direction des piles à combustible 26.1. Ces aménagements du support 28 et/ou de certains systèmes de liaison 30 occupent de l'espace dans chaque ensemble de propulsion 16. De plus, ils engendrent une augmentation de la masse de chaque ensemble de propulsion 16 et, in fine, de la consommation énergétique de l'aéronef.

Le document FR3097201 décrit un système autonome de propulsion qui comprend un châssis ainsi qu'un moteur et des piles à combustibles fixés sur le châssis. Ainsi, selon ce document, le système propulsif et la source d'énergie électrique sont supportés par un support commun si bien que des vibrations issues de l'hélice du système propulsif sont transmises à la source d'énergie électrique.

La présente invention vise à remédier à tout ou partie des inconvénients de l'art antérieur. A cet effet, l'invention a pour objet un ensemble de propulsion d'aéronef selon la revendication 1, comportant au moins un système propulsif électrique ainsi qu'au moins une source d'énergie électrique configurée pour alimenter en énergie électrique le système propulsif électrique, l'ensemble de propulsion présentant des première, deuxième et troisième directions orthogonales, la première direction étant sensiblement parallèle à une direction de poussée du système propulsif électrique, la deuxième direction étant sensiblement horizontale.

Selon l'invention, l'ensemble de propulsion comprend au moins un premier support supportant le système propulsif électrique, au moins une première attache configurée pour relier le premier support et une structure support d'un aéronef, au moins un deuxième support, distinct et dissocié du premier support, supportant la source d'énergie électrique ainsi qu'au moins une deuxième attache configurée pour relier le deuxième support et la structure support.

Le fait de prévoir deux supports distincts et dissociés permet de les simplifier et de ne pas avoir besoin de les concevoir de manière à ce qu'ils limitent la propagation des vibrations, ce qui contribue à réduire l'encombrement des premier et deuxième supports et la masse globale de l'ensemble de propulsion.

L'invention a également pour objet un aéronef comprenant au moins une structure support ainsi qu'au moins un ensemble de propulsion selon les caractéristiques précédentes, relié à la structure support.

Au moins un élément parmi la première attache et la deuxième attache comprend des éléments amortisseurs ou antivibratoires pour filtrer des vibrations selon les première, deuxième et troisième directions.

Selon une autre caractéristique, au moins un premier élément parmi la première attache et la deuxième attache, comprend au moins une liaison pivotante ou une liaison linéaire pour filtrer les vibrations selon au moins une première orientation parmi les première, deuxième et troisième directions et en ce qu'au moins un deuxième élément, différent du premier élément, parmi la première attache et la deuxième attache, comprend au moins une liaison pivotante ou une liaison linéaire pour filtrer les vibrations selon au moins une deuxième orientation, différente de la première orientation, parmi les première, deuxième et troisième directions, les premier et deuxième éléments étant configurés pour filtrer les vibrations selon toutes les première, deuxième et troisième directions.

Selon une autre caractéristique, la première attache comprend une liaison pivotante glissante présentant un axe de pivotement parallèle à la troisième direction et/ou une liaison linéaire autorisant un mouvement de translation selon la deuxième direction et un pivotement selon la troisième direction pour filtrer les vibrations selon au moins la troisième direction.

Selon une autre caractéristique, la deuxième attache comprend au moins liaison linéaire autorisant un mouvement de translation selon la première direction et/ou au moins une biellette reliée à chacune de ses extrémités par des liaisons pivotantes présentant des axes de pivotement parallèles à la deuxième direction pour filtrer les vibrations selon au moins la première direction.

Selon une autre caractéristique, la structure support présente une première raideur selon la première direction ainsi qu'une deuxième raideur selon la troisième direction, différente de la première raideur.

D'autres caractéristiques et avantages ressortiront de la description de l'invention qui va suivre, description donnée à titre d'exemple uniquement, en regard des dessins annexés parmi lesquels :
- La figure 1 est une représentation schématique en perspective d'un aéronef,
- La figure 2 est une représentation schématique d'un ensemble de propulsion sans capot illustrant un mode de réalisation de l'art antérieur,
- La figure 3 est une vue latérale d'un ensemble de propulsion sans capot illustrant un mode de réalisation de l'art antérieur,
- La figure 4 est une représentation schématique d'un ensemble de propulsion sans capot illustrant un mode de réalisation de l'invention,
- La figure 5 est une vue latérale d'un ensemble de propulsion sans capot illustrant un mode de réalisation de l'invention,
- La figure 6 est une représentation schématique en perspective des premier et deuxième supports reliés par des attaches à une structure support illustrant un mode de réalisation de l'invention.

De manière connue, un aéronef comprend un fuselage, des ailes reliées au fuselage qui s'étendent de part et d'autre du fuselage ainsi que des ensembles de propulsion 40 positionnés sous les ailes et reliés à ces dernières. Bien entendu, l'invention n'est pas limitée à ce mode de réalisation. Quel que soit le mode de réalisation, un aéronef comprend au moins un ensemble de propulsion 40 relié à une structure support 42 qui peut être la structure d'une aile, la structure du fuselage ou toute autre structure de l'aéronef.

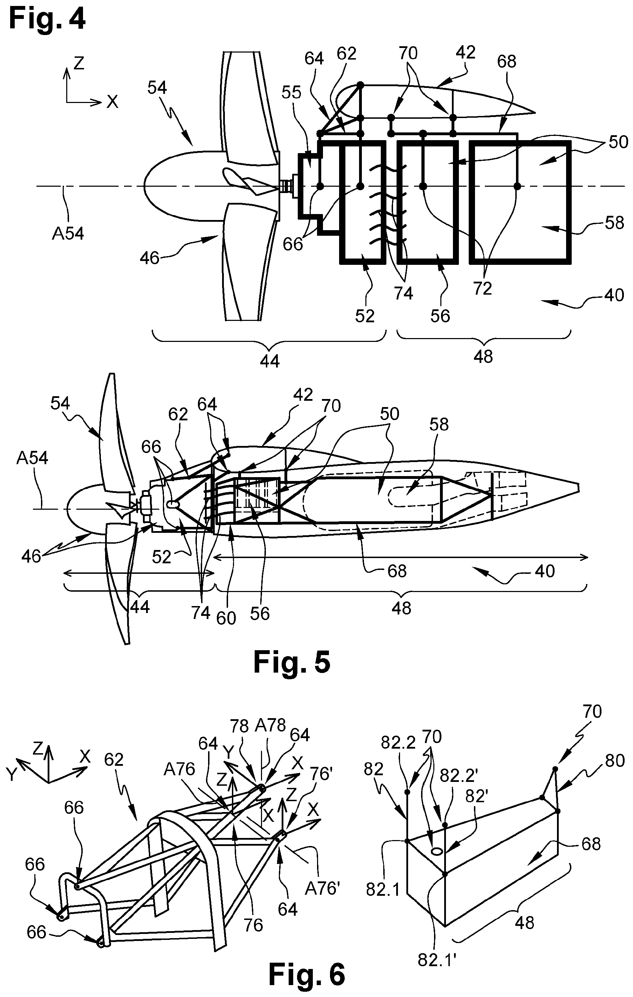

Selon un mode de réalisation visible sur les figures 4 et 5, un ensemble de propulsion 40 d'aéronef comprend une première partie 44 comportant au moins un système propulsif électrique 46 ainsi qu'une deuxième partie 48 comportant au moins une source d'énergie électrique 50 configurée pour alimenter en énergie électrique le système propulsif électrique 46. En complément, l'ensemble de propulsion 40 comprend une structure secondaire sous la forme d'un carénage pour optimiser les propriétés aérodynamiques de l'ensemble de propulsion 40. Cette structure secondaire n'est pas représentée sur la figure 4 et représentée par transparence sur la figure 5.

Selon un mode de réalisation, le système propulsif électrique 46 comprend au moins un moteur électrique 52, une hélice 54 présentant un axe de rotation A54 ainsi qu'un système d'accouplement 55, comme une boîte de vitesse ou un réducteur par exemple, reliant le moteur électrique 52 et l'hélice 54. Le système propulsif électrique 46 génère une poussée orientée selon une direction de poussée sensiblement parallèle à l'axe de rotation A54 de l'hélice 54.

Selon un mode de réalisation, la source d'énergie électrique 50 comprend au moins une pile à combustible 56 configurée pour alimenter le (ou les) moteur(s) électrique(s) 52 en énergie électrique.

Selon une configuration, la source d'énergie électrique 50 comprend également au moins un réservoir à hydrogène 58 configuré pour alimenter en hydrogène les piles à combustible 56 ainsi qu'un système de refroidissement 60 configuré pour refroidir la source d'énergie électrique 50, notamment les piles à combustible 56. Bien entendu, l'invention n'est pas limitée à cette configuration. Ainsi, le réservoir à hydrogène 58 pourrait être positionné dans le fuselage de l'aéronef.

Le moteur électrique 52, l'hélice 54, le système d'accouplement 55, les piles à combustible 56, le réservoir à hydrogène 58 et le système de refroidissement 60 ne sont pas plus détaillés car ils peuvent être identiques à ceux de l'art antérieur.

La première partie 44 comprend au moins un premier support 62 supportant le système propulsif électrique 46 ainsi qu'au moins une première attache 64 configurée pour relier le premier support 62 et la structure support 42. Selon une configuration, le système propulsif électrique 46 est relié au premier support 62 par au moins une première liaison 66.

La deuxième partie 48 comprend au moins un deuxième support 68, distinct et dissocié du premier support 62, supportant la source d'énergie électrique 50 ainsi qu'au moins une deuxième attache 70 configurée pour relier le deuxième support 68 et la structure support 42. Selon une configuration, la source d'énergie électrique 50 est reliée au deuxième support 68 par au moins une deuxième liaison 72.

Dans la mesure où le deuxième support 68 est distinct et dissocié du premier support 62, les vibrations générées par le système propulsif électrique 46, notamment par le moteur électrique 52 et l'hélice 54, ne sont pas transmises à la source d'énergie électrique 50, notamment aux piles à combustible 56, contrairement à l'art antérieur qui prévoit un support unique auquel sont reliés le système propulsif électrique 46 ainsi que la source d'énergie électrique 50.

Le fait de prévoir deux supports 62, 68 distincts et dissociés permet de les simplifier et de ne pas avoir besoin de les concevoir de manière à ce qu'ils limitent la propagation des vibrations, ce qui contribue à réduire l'encombrement des premier et deuxième supports 62, 68 et la masse globale de l'ensemble de propulsion 40.

Selon un mode de réalisation, le premier support 62 est une structure métallique ou en matériau composite. Elle peut être obtenue par tout procédé de fabrication comme par usinage, fabrication additive, mécanosoudage ou autres. A titre d'exemple, le premier support 62 est une structure en treillis mécanosoudée.

Comme le premier support 62, le deuxième support 68 est une structure métallique ou en matériau composite. Elle peut être obtenue par tout procédé de fabrication comme par usinage, fabrication additive, mécanosoudage ou autres. A titre d'exemple, le premier support 62 est une structure en treillis mécanosoudée.

Bien entendu, l'invention n'est pas limitée à ces modes de réalisation pour les premier et deuxième supports 62, 68.

Selon un agencement, la première partie 44 est positionnée à l'avant de la deuxième partie 48. En variante, la première partie 44 est positionnée à l'arrière de la deuxième partie 48. L'ensemble de propulsion 40 comprend au moins un élément souple 74, comme un câble électrique par exemple, pour connecter électriquement les première et deuxième parties 44, 48. L'ensemble de propulsion 40 peut comprendre un élément souple 74 sous la forme d'au moins un conduit avec un tronçon souple, comme un soufflet par exemple, pour véhiculer un fluide entre les première et deuxième parties 44, 48. En raison de la nature souple de ces éléments souples 74, ils ne transmettent pas les vibrations entre les première et deuxième parties 44, 48.

Au moins un élément parmi la première attache 64, la deuxième attache 70 et la structure support 42 est configuré pour filtrer des vibrations selon des première, deuxième et troisième directions X, Y, Z orthogonales afin de limiter la propagation des phénomènes vibratoires entre les premier et deuxième supports 62, 68, la première direction X étant sensiblement parallèle à la direction de poussée du système propulsif électrique 46, la deuxième direction étant sensiblement horizontale.

Un élément parmi la première attache 64, la deuxième attache 70 et la structure support 42 est configuré pour filtrer des vibrations selon les première, deuxième et troisième directions orthogonales X, Y, Z.

Selon une autre configuration, au moins un premier élément parmi la première attache 64, la deuxième attache 70 et la structure support 42 est configuré pour filtrer les vibrations selon au moins une première orientation parmi les première, deuxième et troisième directions X, Y, Z orthogonales. En complément, au moins un deuxième élément, différent du premier élément, parmi la première attache 64, la deuxième attache 70 et la structure support 42 est configuré pour filtrer les vibrations selon au moins une deuxième orientation, différente de la première orientation, parmi les première, deuxième et troisième directions X, Y, Z orthogonales, les premier et deuxième éléments étant configurés pour filtrer les vibrations selon toutes les première, deuxième et troisième directions X, Y, Z orthogonales.

Selon un mode de réalisation visible sur la figure 6, la première attache 64 est configurée pour filtrer les vibrations selon au moins la troisième direction Z, et de préférence selon les deuxième et troisième directions Y et Z. En complément, la deuxième attache 70 est configurée pour filtrer les vibrations selon au moins la première direction X, et de préférence selon les première et deuxième directions X et Y.

Selon ce mode de réalisation, la première attache 64 comprend une liaison pivotante glissante 78 présentant un axe de pivotement A78 parallèle à la troisième direction Z et/ou une liaison linéaire autorisant un mouvement de translation selon la deuxième direction Y et un pivotement selon la troisième direction Z pour filtrer les vibrations selon au moins la troisième direction Z. Selon une configuration, la première attache 64 comprend deux liaisons pivotantes glissantes 76, 76' reliant la première partie 44 et la structure support 42 et présentant des axes de pivotement A76, A76' sensiblement coaxiaux et parallèles à la deuxième direction Y ainsi qu'une liaison pivotante glissante 78 présentant un axe de pivotement A78 sensiblement parallèle à la troisième direction Z. En variante, la liaison pivotante glissante 78 peut être remplacée par une liaison linéaire autorisant un mouvement de translation selon la deuxième direction Y et un pivotement selon la troisième direction Z. La deuxième attache 70 comprend au moins liaison linéaire 80 autorisant un mouvement de translation selon la première direction X et un pivotement selon la deuxième direction Y et/ou au moins une biellette reliée à chacune de ses extrémités par des liaison pivotante présentant un axe de pivotement parallèle à la deuxième direction Y pour filtrer les vibrations selon au moins la première direction X. Selon une configuration, la deuxième attache 70 comprend une deuxième liaison linéaire 80 autorisant un mouvement de translation selon la première direction X et un pivotement selon la deuxième direction Y ainsi que deux biellettes 82, 82' présentant chacune une première extrémité 82.1, 82.1' reliée à la deuxième partie 48 par une liaison pivotante glissante, présentant un axe de pivotement parallèle à la deuxième direction Y et une deuxième extrémité 82.2, 82.2' reliée à la structure support 42, présentant un axe de pivotement parallèle à la deuxième direction Y.

En variante ou en complément, les première et deuxième attaches 64, 70 comprennent des éléments amortisseurs ou antivibratoires, commercialisés sous la dénomination « Silent Bloc » par exemple, et/ou la structure support 42 présente une première raideur selon la première direction X ainsi qu'une deuxième raideur selon la troisième direction Z, différente de la première raideur.

Selon un mode de réalisation, les première et deuxième liaisons 66, 72 comprennent des éléments amortisseurs ou antivibratoires, commercialisés sous la dénomination « Silent Bloc » par exemple, pour limiter la propagation des phénomènes vibratoires entre les éléments reliés par chacune des première ou deuxième liaisons 66, 72.

Bien entendu, l'invention n'est pas limitée à ce mode de réalisation pour la filtration des vibrations par les première et deuxième attaches 64, 70 et la structure support 42. Quel que soit le mode de réalisation, la première attache 64, la deuxième attache 70 et la structure support 42 sont conçues de manière à limiter la propagation des vibrations et éviter le transfert des vibrations entre les première et deuxième parties 44, 48 via la structure support 42.

## Revendications

1. Ensemble de propulsion d'aéronef comportant au moins un système propulsif électrique (46) ainsi qu'au moins une source d'énergie électrique (50) configurée pour alimenter en énergie électrique le système propulsif électrique (46), l'ensemble de propulsion présentant des première, deuxième et troisième directions (X, Y, Z) orthogonales, la première direction (X) étant sensiblement parallèle à une direction de poussée du système propulsif électrique (46), la deuxième direction (Y) étant sensiblement horizontale, **caractérisé en ce que** l'ensemble de propulsion comprend au moins un premier support (62) supportant le système propulsif électrique (46), au moins une première attache (64) configurée pour relier le premier support (62) et une structure support (42) d'un aéronef, au moins un deuxième support (68), distinct et dissocié du premier support (62) de sorte que des vibrations générées par le système propulsif électrique (46) ne soient pas transmises à la source d'énergie électrique (50), supportant la source d'énergie électrique (50) ainsi qu'au moins une deuxième attache (70) configurée pour relier le deuxième support (68) et la structure support (42), au moins un élément parmi la première attache (64) et la deuxième attache (70) comprenant des éléments amortisseurs ou antivibratoires pour filtrer des vibrations selon les première, deuxième et troisième directions (X, Y, Z), l'ensemble de propulsion (40) comportant au moins un élément souple (74) pour connecter électriquement la source d'énergie électrique (50) et le système de propulsif électrique (46).

2. Aéronef comprenant au moins une structure support (42) ainsi qu'au moins un ensemble de propulsion selon la revendication 1 relié à la structure support (42).

3. Aéronef selon la revendication 2, **caractérisé en ce qu'**au moins un premier élément parmi la première attache (64) et la deuxième attache (70) comprend au moins une liaison pivotante (76, 76', 78) ou une liaison linéaire (80) pour filtrer les vibrations selon au moins une première orientation parmi les première, deuxième et troisième directions (X, Y, Z) et **en ce qu'**au moins un deuxième élément, différent du premier élément, parmi la première attache (64) et la deuxième attache (70) comprend au moins une liaison pivotante (76, 76', 78) ou une liaison linéaire (80) pour filtrer les vibrations selon au moins une deuxième orientation, différente de la première orientation, parmi les première, deuxième et troisième directions (X, Y, Z), les premier et deuxième éléments étant configurés pour filtrer les vibrations selon toutes les première, deuxième et troisième directions (X, Y, Z).

4. Aéronef selon la revendication précédente, **caractérisé en ce que** la première attache (64) comprend une liaison pivotante glissante (78) présentant un axe de pivotement (A78) parallèle à la troisième direction (Z) et/ou une liaison linéaire autorisant un mouvement de translation selon la deuxième direction (Y) et un pivotement selon la troisième direction (Z) pour filtrer les vibrations selon au moins la troisième direction (Z).

5. Aéronef selon la revendication précédente, **caractérisé en ce que** la première attache (64) comprend deux liaisons pivotantes glissantes (76, 76') reliant le premier support (62) et la structure support (42) et présentant des axes de pivotement (A76, A76') sensiblement coaxiaux et parallèles à la deuxième direction (Y) ainsi qu'une liaison pivotante glissante (78) présentant un axe de pivotement (A78) sensiblement parallèle à la troisième direction (Z).

6. Aéronef selon l'une des revendications-3 à 5, **caractérisé en ce que** la deuxième attache (70) comprend au moins liaison linéaire (80) autorisant un mouvement de translation selon la première direction (X) et/ou au moins une biellette reliée à chacune de ses extrémités par des liaisons pivotantes présentant des axes de pivotement parallèles à la deuxième direction (Y) pour filtrer les vibrations selon au moins la première direction (X).

7. Aéronef selon la revendication précédente, **caractérisé en ce que** la deuxième attache (70) comprend une deuxième liaison linéaire (80) autorisant un mouvement de translation selon la première direction (X) ainsi que deux biellettes (82, 82') présentant chacune une première extrémité (82.1, 82.1') reliée au deuxième support (68) par une liaison pivotante glissante, présentant un axe de pivotement parallèle à la deuxième direction (Y) et une deuxième extrémité (82.2, 82.2') reliée à la structure support (42), présentant un axe de pivotement parallèle à la deuxième direction (Y).

8. Aéronef selon l'une des revendications précédentes, **caractérisé en ce que** la structure support (42) présente une première raideur selon la première direction (X) ainsi qu'une deuxième raideur selon la troisième direction (Z), différente de la première raideur.

## Patentansprüche

1. Antriebseinheit eines Luftfahrzeugs mit wenigstens einem elektrischen Antriebssystem (46) sowie wenigstens einer elektrischen Energiequelle (50), die so eingerichtet ist, dass sie das elektrische Antriebssystem (46) mit elektrischer Energie versorgt, wobei die Antriebseinheit eine erste, eine zweite und eine dritte Richtung (X, Y, Z) aufweist, die orthogonal zueinander sind, wobei die erste Richtung (X) im Wesentlichen parallel zu einer Schubrichtung des elektrischen Antriebssystems (46) ist und die zweite Richtung (Y) im Wesentlichen horizontal ist, **dadurch gekennzeichnet, dass** die Antriebsanordnung wenigstens einen ersten Träger (62) aufweist, der das elektrische Antriebssystem (46) trägt, wenigstens eine erste Befestigung (64), die so eingerichtet ist, dass sie den ersten Träger (62) und eine Tragestruktur (42) eines Luftfahrzeugs verbindet, wenigstens eine zweite Halterung (68), die von der ersten Halterung (62) verschieden und getrennt ist, so dass von dem elektrischen Antriebssystem (46) erzeugte Vibrationen nicht auf die elektrische Energiequelle (50) übertragen werden, und die die elektrische Energiequelle (50) trägt, sowie wenigstens eine zweite Befestigung (70), die so eingerichtet ist, dass sie die zweite Halterung (68) und die Tragestruktur (42) verbindet, wobei wenigstens ein Element aus erster Befestigung (64) und zweiter Befestigung (70) Dämpfungs- oder Antivibrationselemente zum Filtern von Vibrationen in der ersten, zweiten und dritten Richtung (X, Y, Z) aufweist, und wobei die Antriebsanordnung (40) wenigstens ein flexibles Element (74) zum elektrischen Verbinden der elektrischen Energiequelle (50) und des elektrischen Antriebssystems (46) aufweist.

2. Luftfahrzeug, das wenigstens eine Tragestruktur (42) sowie wenigstens eine mit der Tragestruktur (42) verbundene Antriebseinheit nach Anspruch 1 umfasst.

3. Luftfahrzeug nach Anspruch 2, **dadurch gekennzeichnet, dass** wenigstens ein erstes Element aus erster Befestigung (64) und zweiter Befestigung (70) wenigstens eine Schwenkverbindung (76, 76', 78) oder eine lineare Verbindung (80) zum Filtern von Schwingungen in wenigstens eine erste Richtung aus erster, zweiter und dritter Richtung (X, Y, Z) aufweist, und dass wenigstens ein zweites Element, das sich von dem ersten Element unterscheidet, aus erster Befestigung (64) und zweiter Befestigung (70) wenigstens eine Schwenkverbindung (76, 76', 78) oder eine lineare Verbindung (80) zum Filtern von Schwingungen in wenigstens eine zweite, von der ersten Ausrichtung verschiedene Richtung aus erster, zweiter und dritten Richtung (X, Y, Z) aufweist, wobei das erste und das zweite Element so eingerichtet sind, dass sie Schwingungen in alle ersten, zweiten und dritten Richtungen (X, Y, Z) filtern.

4. Luftfahrzeug nach dem vorhergehenden Anspruch,
**dadurch gekennzeichnet, dass** die erste Befestigung (64) eine gleitende Schwenkverbindung (78) mit einer Schwenkachse (A78) parallel zur dritten Richtung (Z) und/oder eine lineare Verbindung aufweist, die eine Translationsbewegung in der zweiten Richtung (Y) und ein Schwenken in der dritten Richtung (Z) zulässt, um die Schwingungen zumindest in der dritten Richtung (Z) zu filtern.

5. Luftfahrzeug nach dem vorhergehenden Anspruch,
**dadurch gekennzeichnet, dass** die erste Befestigung (64) zwei gleitende Schwenkverbindungen (76, 76') umfasst, die den ersten Träger (62) und die Tragestruktur (42) verbinden und Schwenkachsen (A76, A76') aufweisen, die im Wesentlichen koaxial und parallel zur zweiten Richtung (Y) sind, sowie eine gleitende Schwenkverbindung (78), die eine Schwenkachse (A78) aufweist, die im Wesentlichen parallel zur dritten Richtung (Z) ist.

6. Luftfahrzeug nach einem der Ansprüche 3 bis 5,
**dadurch gekennzeichnet, dass** die zweite Befestigung (70) wenigstens eine lineare Verbindung (80), die eine Translationsbewegung in der ersten Richtung (X) zulässt, und/oder wenigstens einen Schwingarm umfasst, der mit jedem seiner Enden durch Schwenkverbindungen verbunden ist, die Schwenkachsen parallel zur zweiten Richtung (Y) aufweisen, um Schwingungen in wenigstens der ersten Richtung (X) zu filtern.

7. Luftfahrzeug nach dem vorhergehenden Anspruch,
**dadurch gekennzeichnet, dass** die zweite Befestigung (70) eine zweite lineare Verbindung (80), die eine Translationsbewegung in der ersten Richtung (X) zulässt, sowie zwei Schwingarme (82, 82') umfasst, die jeweils ein erstes Ende (82.1, 82.1') aufweisen, das mit dem zweiten Träger (68) durch eine gleitende Schwenkverbindung verbunden ist, die eine Schwenkachse parallel zur zweiten Richtung (Y) aufweist, und ein zweites Ende (82.2, 82.2'), das mit der Tragestruktur (42) verbunden ist und das eine Schwenkachse parallel zur zweiten Richtung (Y) aufweist.

8. Luftfahrzeug nach einem der vorhergehenden Ansprüche, **dadurch gekennzeichnet, dass** die Tragestruktur (42) eine erste Steifigkeit in der ersten Richtung (X) sowie eine zweite Steifigkeit in der dritten Richtung (Z) aufweist, die sich von der ersten Steifigkeit unterscheidet.

## Claims

1. Aircraft propulsion assembly including at least one electric propulsion system (46) as well as at least one source of electrical energy (50) configured to supply the electric propulsion system (46) with electrical energy, the propulsion assembly having mutually orthogonal first, second and third directions (X, Y, Z), the first direction (X) being substantially parallel to a direction of thrust of the electric propulsion system (46), the second direction (Y) being substantially horizontal, **characterized in that** the propulsion assembly comprises at least one first support (62) supporting the electric propulsion system (46), at least one first attachment (64) configured to connect the first support (62) and a support structure (42) of an aircraft, at least one second support (68) distinct from and dissociated from the first support (62) so that vibrations generated by the electric propulsion system (46) are not transmitted to the electrical power source (50), supporting the source of electrical energy (50) as well as at least one second attachment (70) configured to connect the second support (68) and the support structure (42), at least one element from the first attachment (64) and the second attachment (70) comprising shock absorbing or antivibration elements to filter vibrations in the first, second and third directions (X, Y, Z), the propulsion assembly (40) comprising at least one flexible element (74) for electrically connecting the electrical energy source (50) and the electric propulsion system (46).

2. Aircraft comprising at least one support structure (42) and at least one propulsion assembly according to claim 1 connected to the support structure (42).

3. Aircraft as claimed in claim 2, **characterized in that** at least one element from the first attachment (64) and the second attachment (70) comprises at least one pivoting connection (76, 76', 78) or linear connection (80) for filtering vibrations in at least one first orientation from the first, second and third directions (X, Y, Z) and **in that** at least one second element, different from the first element, from the first attachment (64) and the second attachment (70) comprises at least one pivoting connection (76, 76', 78) or linear connection (80) for filtering vibrations in at least one second orientation different from the first orientation from the first, second and third directions (X, Y, Z), the first and second elements being configured to filter vibrations in all of the first, second and third directions (X, Y, Z).

4. Aircraft as claimed in the preceding claim, **characterized in** the first attachment (64) comprises a pivoting sliding connection (78) having a pivot axis (A78) parallel to the third direction (Z) and/or a linear connection allowing movement in translation in the second direction (Y) and pivoting in the third direction (Z) to filter the vibrations in at least the third direction (Z).

5. Aircraft as claimed in the preceding claim, **characterized in that** the first attachment (64) comprises two pivoting sliding connections (76, 76') connecting the first support (62) and the support structure (42) and having substantially coaxial pivot axes (A76, A76') parallel to the second direction (Y) as well as a pivoting sliding connection (78) having a pivot axis (A78) substantially parallel to the third direction (Z).

6. Aircraft as claimed in any one of claims 3 to 5, **characterized in that** the second attachment (70) comprises at least one linear connection (80) allowing movement in translation in the first direction (X) and/or a link connected at each of its ends by pivoting connections having pivot axes parallel to the second direction (Y) to filter vibrations in at least the first direction (X).

7. Aircraft as claimed in the preceding claim, **characterized in that** the second attachment (70) comprises a second linear connection (80) allowing movement in translation in the first direction (X) as well as two links (82, 82') each having a first end (82.1, 82.1') connected to the second support (68) by a pivoting sliding connection having a pivot axis parallel to the second direction (Y) and a second end (82.2, 82.2') connected to the support structure (42) having a pivot axis parallel to the second direction (Y).

8. Aircraft as claimed in one of the preceding claims, **characterized in that** the support structure (42) has a first stiffness in the first direction (X) and a second stiffness in the third direction (Z) different from the first stiffness.
